Europäisches Patentamt

European Patent Office

Office européen des brevets

(11) Publication number: **0 212 895**
**A1**

## (12) EUROPEAN PATENT APPLICATION

(21) Application number: **86305959.8**

(22) Date of filing: **01.08.86**

(51) Int. Cl.⁴: **C 25 B 11/06, H 01 M 4/98**

(30) Priority: **02.08.85 US 761840**

(43) Date of publication of application: **04.03.87**
**Bulletin 87/10**

(84) Designated Contracting States: **DE GB IT**

(71) Applicant: **E.I. DU PONT DE NEMOURS AND COMPANY, 1007 Market Street, Wilmington Delaware 19898 (US)**

(72) Inventor: **Meadowcroft, William Charles, Sr., P.O. Box 124, Avondale Pennsylvania 19311 (US)**

(74) Representative: **Myerscough, Philip Boyd et al, J.A.Kemp & Co. 14, South Square Gray's Inn, London, WC1R 5EU (GB)**

(54) **Depyrophoricized raney metal cathodes.**

(57) Activated Raney metal cathodes are depyrophoricized by contacting them with at least one high-boiling, water-soluble, liquid organic polyhydroxyl compound.

EP 0 212 895 A1

1

## TITLE

DEPYROPHORICIZED RANEY METAL CATHODES

## BACKGROUND OF THE INVENTION

This invention relates to depyrophoricized Raney metal cathodes for use in electrolysis processes and to methods for preparing them.

Raney metals are well known in the art and, although usually based on nickel, are occasionally based on other metals such as cobalt, or on mixtures of metals, e.g., mixtures of nickel and cobalt. The primary metal, e.g. nickel, is alloyed with a second metal such as zinc or aluminum that readily reacts with alkalis. In addition, the Raney metal may be tailored by including in it minor amounts of a third metal. Molybdenum is an example of a commonly used modifying metal.

Raney metals are often used as low overvoltage cathodes for use in electrolysis processes. Raney metal coatings on electrodes can be prepared by a variety of techniques including electroplating, plasma spraying or surface diffusion alloying by contacting the surface of the nickel face material with zinc or aluminum metal at elevated temperatures. See for example, U.S. Patents 4,116,804, 4,169,025 and 4,251,344, all issued to Needes and assigned to E. I. du Pont de Nemours and Company, and European Patent Application 83304386.2 (Publication No. 100659) also assigned to E. I. du Pont de Nemours and Company. Attempts have also been made to develop self supporting sheets of Raney metal for use as electrodes as described, for example, in U.S. 3,637,437 to Goldberger. Raney metals have also been bonded directly to ion-exchange membranes to yield composite electrodes for use in chloralkali processes as disclosed in U.S. 4,297,182 to Oda et al.

1

The Raney metal catalysts must be activated by dissolving the zinc or aluminum component with an alkaline agent to leave a high surface area coating consisting primarily of the base metal, e.g. nickel or cobalt. Solutions of sodium hydroxide in the range of 5-20% are most commonly used.

After activation, the Raney metals are well known to be pyrophoric if allowed to dry out. The heat generated is primarily due to the combustion of the adsorbed hydrogen remaining from the activation step with atmospheric oxygen. The combustion can proceed further to burn the catalytic coating. This exothermic reaction with Raney metals is highly undesirable since it can warp electrode structures, melt or otherwise damage adjacent components such as membranes, act as an ignition source for fires, as well as produce a significant decrease in the activity of the electrocatalytic coating.

This exothermic reaction can be avoided by always keeping the material water wet, but this is frequently inconvenient and carries the risk of accidental drying out. A number of other techniques have been suggested to prevent this exothermic reaction, many of which are described in U.S. Patent 4,415,416 to Kadija; however, these techniques are either inconvenient, involve handling of hazardous chemicals, or produce a partial loss of activity of the Raney metal cathode.

There thus exists a need for an improved method of depyrophoricizing Raney metal cathodes.

BRIEF DESCRIPTION OF THE INVENTION

It has now been found that activated Raney cathodes can be depyrophoricized by contacting them with one or more liquid, water-soluble organic polyhydroxyl compounds having boiling points of at least about 220°C. This invention therefore relates to this method for depyrophoricizing Raney cathodes and to the cathodes so treated. Tests indicate that Raney cathodes treated according to this invention can be stored in contact with air for an extended period of time without exhibiting pyrophoric tendencies and that the depyrophoricizing process of this invention does not adversely affect the electrochemical activity of cathodes.

DETAILED DESCRIPTION OF THE INVENTION

The liquid, water-soluble organic polyhydroxyl compounds used in this invention to render Raney metal cathodes nonpyrophoric have boiling points of at least about 220°C and, preferably, of at least about 240°C. The term "water-soluble" as used herein denotes compounds having a water solubility of at least about 1 gram solute per 100 ml. water at 25°C. Polyhydroxyl compounds are those having two or more hydroxyl groups, and suitable compounds for use in this invention include, but are not limited to, glycerine, diethylene glycol, triethylene glycol, tetraethylene glycol, triethanol amine and polyethylene glycol. Most preferred for reasons of economy and performance is diethylene glycol.

The Raney cathodes are as described previously, i.e., they can be prepared by coating an electrically conductive substrate (e.g., iron, ferrous alloys such as mild steel and stainless steel, nickel and nickel alloys) with Raney metal, they can be a self supporting sheet of Raney metal or a coating of Raney metal bonded to an ion exchange membrane.

The cathode can be contacted with the liquid organic polyhydroxyl compound neat or in aqueous solutions of concentrations preferably exceeding about 5 wt %. It is preferred that the polyhydroxyl compound be in an aqueous solution in a concentration of about 25-50 wt %. The manner in which the polyhydroxyl compound and the Raney metal are contacted is not critical so long as it is adequate to leave a continuous film of the polyhydroxyl compound on the cathode surface (i.e., leaving no portion of the cathode surface exposed to the atmosphere). Spraying and soaking are typical methods. No hardening step is required. It may be possible to contact an unactivated cathode simultaneously with polyhydroxyl compound and an alkaline agent to both activate it and depyrophoricize it at the same time.

Depyrophoricized Raney type cathodes according to this invention are useful in electrochemical cells and are especially useful in chloralkali cells equipped with ion-exchange membranes that have been pre-expanded with various polyhydroxyl compounds as taught in EP-A-172673.

After the depyrophoricized Raney type cathodes of this invention are installed in chloralkali cells, it is desirable to remove the polyhydroxyl compound from the cathode prior to cell start-up to reduce contamination of the product caustic by the polyhydroxyl compound and to reduce foaming at cell start-up. One method for removing the compound is a simple pre-wash. Water or an aqueous solution of brine is placed in the anode compartment of the cell and water or an aqueous solution of caustic is placed in the cathode compartment of the cell. The solutions are allowed to simultaneously remain in the cell for a period of time sufficient to remove substantially all (defined as approximately 90%) of the polyhydroxyl compound from the cathode, typically for about fifteen minutes or more at room temperature, and are then removed. Higher temperatures may be used but, at temperatures above about 40°C, damage to other cell components can occur. The pre-wash procedure may then be repeated until the desired amount of polyhydroxyl compound is removed. It is estimated that each pre-wash removes about 90% of the remaining polyhydroxyl compound in the cathode, so two pre-washes should suffice to remove 99% of the compound. When the depyrophoricized cathodes of this invention are used in conjunction with the pre-expanded membranes of EP-A-172673 the same pre-wash procedure will be effective to remove the polyhydroxyl compounds from both the cathode and the pre-expanded membrane.

The following examples are presented to further illustrate this invention.

### Comparative Example A

An experimental metal nickel cathode from a laboratory test cell having a surface area of 45 cm$^2$ was coated with a Raney nickel alloy whose composition was 57% Ni, 43% Al using plasma spraying. The coated area was activated by soaking in 10% NaOH overnight. The caustic was rinsed off with water and a thin gauge wire thermocouple attached to the surface while keeping the assembly wet. After drying in air for 15 minutes the catalytic coating underwent a noticeable exothermic reaction. The temperature recorder monitoring the thermocouple went off-scale with the peak temperature estimated to be 250°C.

## Example 1

Comparative Example A was repeated except that after rinsing off the caustic, the cathode assembly was soaked in a solution of 35% diethylene glycol in water for 30 minutes. After attaching the thermocouple, the electrode was allowed to stand in air. Even after 24 hours, no evidence of an exotherm was detected on the temperature recorder chart.

The electrode was then used in a laboratory test cell in conjunction with a pre-expanded membrane which had been treated with diethylene glycol (as taught in EP-A-172673.                The cell operated at 3.05 volts and 96% current efficiency, which is equivalent to tests in which this type of electrode was kept wetted with water after activation.

## Comparative Example B

A cathode assembly from a commercial type membrane cell was coated in the active area with the Raney nickel composition of Example A. It was activated in 10% sodium hydroxide overnight and then water rinsed. Fine gauge wire thermocouples were attached in two places. When the water began to evaporate from the surface, a strong exothermic reaction was observed. Peak surface temperature was in the range of 300-400°C. Visible warpage and distortion of the assembly was apparent as heating occurred.

## Example 2

Comparative Example B was repeated except that the cathode was soaked in a solution of 25% diethylene glycol in water after the water rinse. The assembly was allowed to hang exposed to air on all sides. After 24 hours the temperature recorder showed no indication of a temperature increase.

This electrode was installed in a pilot cell electrolyzer and used in a series of membrane performance tests. Even after 128 days of operation with ten assembly and disassembly cycles, it continued to show excellent performance with only a small increase of overvoltage estimated to be 50-80 mV.

### Comparative Examples C-F and Examples 3-8

A quantity (25 grams of a powdered Raney nickel alloy containing 57% Ni and 43% Al) was activated by treating with 10% NaOH overnight. The powder was then water rinsed until free of caustic and stored under water. Small portions of this powder were then removed and soaked in a series of solutions of alcohols and polyhydroxyl compounds (50 wt. % in water). The powders were removed from the solution and placed on a watch glass. Excess liquid was removed by blotting with tissue paper. The watch glass was then exposed to air in a laboratory hood. Small chips of paraffin wax were placed on top of the small pile of powder as an indicator of an exothermic reaction. Observations were made over a period of one week. Results are summarized in the following table.

| Example | Compound | Boiling Point, °C | Exotherm |
|---------|----------|-------------------|----------|
| C | Methyl Alcohol | 65 | Yes |
| D | Ethyl Alcohol | 78.5 | Yes |
| E | Ethylene Glycol | 198 | Yes |
| F | Propylene Glycol | 189 | Yes |
| 3 | Diethylene Glycol | 245 | No |
| 4 | Triethylene Glycol | 276 | No |
| 5 | Tetraethylene Glycol | 328 | No |
| 6 | Glycerine | 290 | No |
| 7 | Triethanol Amine | 277 (150 mm) | No |
| 8 | Polyethylene Glycol | 350 | No |

0212895

- 8 -

<u>CLAIMS</u>

1. A method for depyrophoricizing an activated Raney type cathode which comprises contacting said cathode with at least one liquid organic polyhydroxyl compound having a boiling point of at least $220^{\circ}$C and a water solubility of at least 1 gram per 100 ml. water at $25^{\circ}$C.

2. A method according to Claim 1 where the polyhydroxyl compound has a boiling point of at least $240^{\circ}$C.

3. A method according to Claim 2 where the polyhydroxyl compound is selected from diethylene glycol, triethylene glycol, tetraethylene glycol, glycerine, triethanol amine and polyethylene glycol.

4. A method according to Claim 1, 2 or 3, wherein there is used an aqueous solution containing 25 to 50% by weight of the polyhydroxyl compound.

5. Use of a depyrophoricized Raney type cathode prepared by a method as claimed in any one of Claims 1 to 4 in a chloralkali cell equipped with an ion-exchange membrane.

0212895

**European Patent Office**

**EUROPEAN SEARCH REPORT**

Application number

EP 86 30 5959

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 159 736 (BADISCHE ANILIN- & SODA-FABRIK) * Page 3, lines 26-34; example 1 * | 1-3 | C 25 B 11/06 H 01 M 4/98 |
| Y | DE-A-2 853 066 (WINSEL) * Page 4, lines 16-23; page 5, lines 22-26 * | 1-3 | |
| A | FR-A-2 371 528 (E.I. DUPONT DE NEMOURS AND COMPANY) * Page 12, line 32 - page 13, line 7; page 14, lines 6-9 * & US-A-41 69 025 (Cat. D) | 1,5 | |
| A | GB-A-1 088 471 (ALLMANNA SVENSKA ELEKTRISKA AKTIEBOLAGET) | | **TECHNICAL FIELDS SEARCHED (Int. Cl.4)** |
| A | FR-A-1 509 966 (VARTA AG) | | C 25 B H 01 M |

The present search report has been drawn up for all claims

| Place of search | Date of completion of the search | Examiner |
|---|---|---|
| THE HAGUE | 20-11-1986 | COOK S.D. |